# EUROPEAN PATENT SPECIFICATION

(11) **EP 1 042 195 B1**
(45) Date of publication and mention of the grant of the patent: **06.10.2004**
(21) Application number: 98923263.2
(22) Date of filing: 13.05.1998
(51) Int. Cl.: B65G 25/04, B27B 25/00

(54) **FEEDING DEVICE**
ZUFÜHRVORRICHTUNG
DISPOSITIF D'ALIMENTATION

(30) Priority: 14.05.1997 SE 9701776
(43) Date of publication of application: 11.10.2000
(73) Proprietor: Hortinorr AB, 872 98 Noraström (SE)
(72) Inventor: ALEXANDERSON, Lars, S-872 98 Noraström (SE)
(74) Representative: Wiklund, Erik
(86) International application number: PCT/SE1998/000882
(87) International publication number: WO 1998/051595

(56) References cited:
- WO-A-91/17100
- WO-A-94/07779
- SE-B- 449 476
- US-A- 2 995 235
- US-A- 5 174 351
- US-A- 5 678 681

## Description

The present invention relates to a device for gradual cross-feeding of elongate objects from a loading end to a discharging end, comprising a stationary support frame, which in profile is stepped in at least three sections which are arranged in separate planes and each have at least two upper sliding and supporting surfaces extended in the feeding direction and intended for the objects and which, at their front end in the feeding direction, are terminated with a step front edge forming a step down to the sliding and supporting surfaces of a possible subsequent section, and a feeding arrangement, which is also stepped in profile and has one section less than the number of sections in the support frame and the sections of which each have at least two upper sliding and supporting surfaces extended in the feeding direction and intended for the objects and are terminated at their front end in the feeding direction with a step front edge forming a step down to the sliding and supporting surfaces of a possible subsequent section, the upper supporting surfaces of the feeding arrangement in one section being in a retracted initial position, vertically positioned at a level below the supporting surfaces of the support frame in the corresponding section but at a level above the supporting surfaces of the support frame in a possible subsequent section, and the feeding arrangement being reciprocatable along the support frame by means of a power generating means to effect the feeding of the objects by alternating engagement of the objects between the step front edges of the support frame and the feeding arrangement.

### Background of the Invention

Cross-feeding of elongate objects occurs, inter alia, in the manufacturing industry, e.g. in the wood-manufacturing industry when round timber is to be supplied to a processing line with processors for barking, chipping, sawing and the like. Cross-feeding can, however, also be used for other purposes and in other branches of industry, such as the metal and engineering industry, for cross-feeding of elongate metal blanks.

From e.g. SE 449,476 a device is known of the type mentioned by way of introduction for cross-feeding of round timber piece by piece. To secure piece-by-piece feeding, each section has a length substantially corresponding to the diameter of the largest round logs to be fed, and more particularly the length of each section is about 2-3 times greater than the height of the step or the perpendicular distance between the planes of two sections. Further, in the feeding direction the pitch of the device is relatively steep with an angle of about 35° in relation to the horizontal plane for possible excess logs to roll downwards when more than one log is in the same section. The feeding arrangement is supported by and displaceable along at least two vertically adjustable girders arranged under the support frame. This makes the feeding device relatively expensive and results in its taking up a relatively great deal of space in the vertical direction.

A similar feeding device is disclosed in SE 468,675, but here the feeding arrangement is not displaceable in parallel to the upper supporting surfaces of the support frame but at an angle, which is somewhat smaller in relation to the horizontal plane. Further, the underside of the actual feeding arrangement is provided with a number of bracket-like parts, whose down-facing surfaces form a plane of displacement along which the feeding arrangement is supported and displaceable on rollers or rolls connected with the supporting stand. This feeding device is also expensive to manufacture and takes up a great deal of space in the vertical direction.

For cross-feeding elongate objects, preferably round timber, it is also known to use chain conveyors. In this case, the wood is supported on at least two endless chains, which each run on the upper side of a girder or the like. Such chain conveyors are in particular used for bundle feeding of piles or stacks of wood. Chain conveyors, however, suffer from a number of disadvantages. They are expensive as regards purchase as well as operation and maintenance, they take up a relatively large space in the vertical direction and provide no automatic directing of the wood to a perpendicular position in relation to the feeding direction, as do step feeders of the type mentioned by way of introduction. Therefore, chain conveyors are often combined with a steep slope or sliding plane at their discharging end for the directing and correct positioning of the timber when descending. This requires that the chain conveyor, and thus also the wood, be supported at a relatively high level above the ground or the floor.

### Summary of the Invention

The present invention aims at obviating the problems and disadvantages of known feeding devices for cross-feeding of elongate objects.

According to a first aspect of the invention, an object is to simplify the construction, reduce the manufacturing costs and reduce the need of space vertically, transversely of the feeding direction of feeding devices of the type mentioned by way of introduction. At least this object is attained by means of a device according to claim 1.

According to a second aspect of the invention, an object is to provide a device for cross-feeding bundles or stacks of elongate objects, which device is inexpensive as regards purchase as well as operation and maintenance and which automatically strives to direct the objects to a position perpendicular to the feeding direction.

The basis of the invention is thus the knowledge that the design of the step feeder can be substantially simplified and made cheaper and the consumption of material and space requirements can be reduced if the feeding arrangement is supported displaceably along the same supporting surfaces of the support frame as displaceably support the elongate objects or the pieces of wood.

The support frame can be formed in an arbitrary manner, e.g. in the form of a closed deck, flange portions directed upwards forming the supporting surfaces. Preferably, the support frame is, however, formed of girders extended in the feeding direction. In a similar manner, the feeding arrangement can be formed in an arbitrary manner, but preferably it is formed of girders, which are extended in the feeding direction and arranged at the side of the frame girders. The feeding girders can be supported by the frame girders in many different ways, but in a preferred embodiment each feeding girder section is terminated with a cross girder, which extends between at least two frame girders and is displaceably supported on their upper surfaces.

The support bearing between the feeding arrangement and the bearing frame can be a slide bearing, as in the preferred embodiment. In general, it is then also suitable to arrange some kind of lubricating device for the slide bearing. This has the advantage of also facilitating the displacement of the wood on the supporting surfaces. The support bearing could, however, have the form of a roll or the like running on the supporting surface.

The step feeder according to the invention can be designed in the form of a single feeder with relatively short sections and a steep inclination, e.g. an inclination of 30-40° upwards from the loading end to the discharging end. In the preferred embodiment of the invention described below, the feeder is, however, designed as a bundle feeder with long sections for accommodating stacks of wood and substantially no inclination at all between the loading end and the discharging end. When using the feeding device as a bundle feeder, the supporting surfaces have preferably an angle of about 15° max, preferably about 10° max and most preferred about 6° max in relation to the horizontal plane. At the discharging end, the bundle feeder can be connected to a single feeder according to the invention or some other optional type to feed the pieces of wood one by one to a processor or out onto a conveyor.

When using the invention as a bundle feeder, it is an advantage if each section is as long as possible on the one hand to reduce the costs, and on the other, for the inclination in each section thereby to be small at no level difference or at a small level difference between the loading end and the discharging end. The step length is, however, reduced by the shearing tendency of the wood bundles. If the supporting surfaces are lubricated, the shearing tendency is reduced, thereby also making it possible to increase the section length. In general, the length of section is at least 6 times, preferably at least 8 times and most preferred 10 times greater than the height of the step between adjacent sections.

According to the invention, the feeding device comprises a support frame including at least two sections, but of course it can comprise an optional number of sections, in which the feeding arrangements can be interconnected for synchronized feeding as well as individually controllable for separate feeding.

### Brief Description of the Accompanying Drawings

In the drawings
- Fig. 1: is a side view of a feeding devic according to the invention in the form of a bundle feeder with three sections,
- Fig. 2: is a top view of the feeding device according to Fig. 1,
- Fig. 3: is a cross-sectional view of the feeding device according to Figs 1 and 2 and
- Figs 4-10: are side views showing the feeding device of Figs 1-3 in different operating positions and at different degrees of loading.

### Detailed Description of a Preferred Embodiment of the Invention

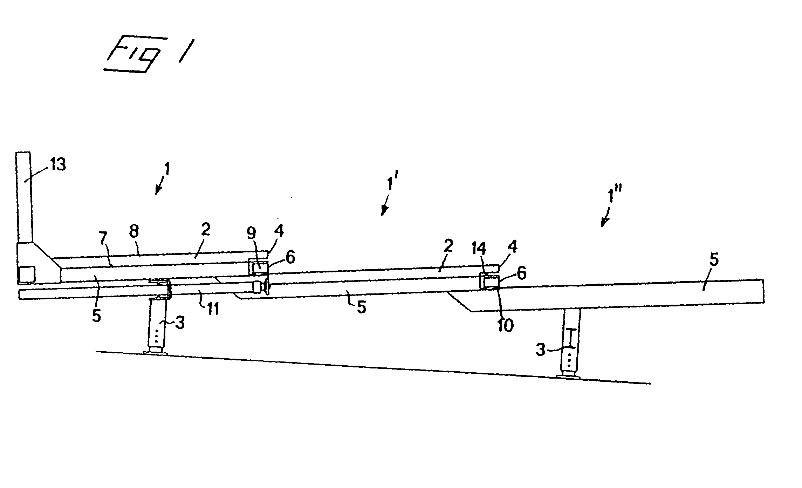

First reference is made to Figs 1-3, which show in detail in a side view, a top view and a cross-sectional view the detailed design of a feeding device according to the invention. It is composed of three sections 1, 1', 1" and includes in total four frame girders 2, which are supported by two stands 3. Each frame girder 2 is composed of three straight girder portions, one for each section 1, which are connected in steps so that a step with a step front edge 4 is formed between the sections or the girder portions.

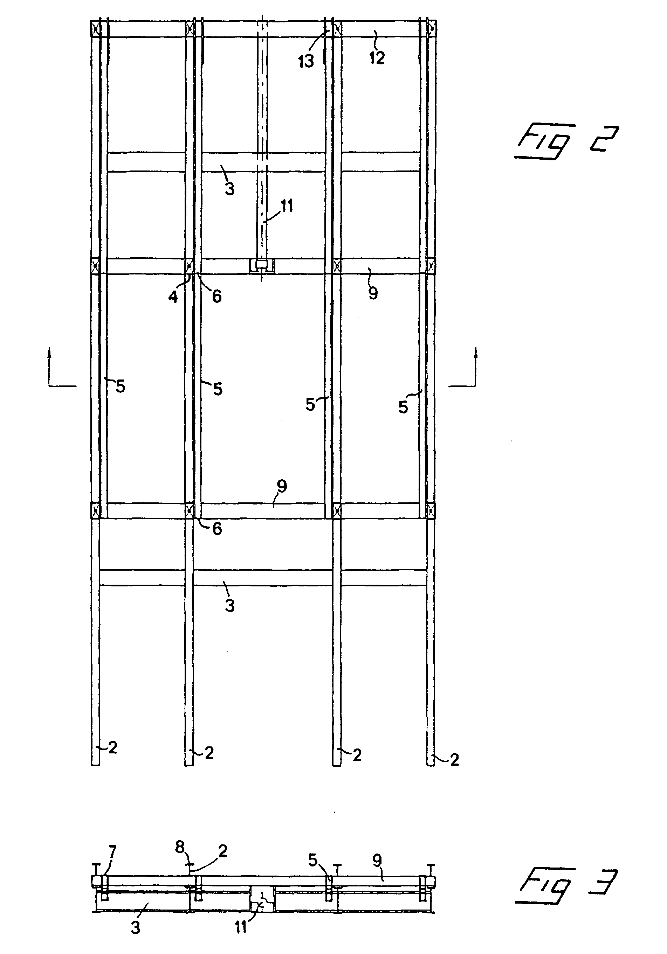

The feeding arrangement includes four feeding girders 5, each composed of two straight girder portions, i.e. one section less than the frame girders, which are interconnected in steps so that a step front edge 6 is formed, directed forwards in the feeding direction, between the sections and at the end of the feeding arrangement. As is shown in Figs 2 and 3, the feeding girders 5 are arranged close to the frame girders 2 and are thereby laterally guided by these. The feeding girders are further placed so that their top faces 7, serving as sliding and supporting surfaces, are located at a level under the top faces 8, serving as sliding and supporting surfaces, of the frame girders 2 in the corresponding section (i.e. in a retracted initial position), but at a level above the supporting surfaces 8 of the frame girders in the subsequent section.

At the downstream end of each feeding girder section, the feeding girders are interconnected by way of a cross girder 9, which extends continually across and is supported by the frame girders 2 in the subsequent section. The contact surfaces between the cross girders 9 and the frame girders thus serve as a slide bearing by way of which the feeding arrangement is supported on the frame girders and is reciprocatable along these. Suitably, some kind of friction-reducing lining 10 can be arranged between the cross girders and the frame girders, and preferably the step feeder is also provided with some kind of lubricating device (not shown in detail) for additional reduction of the friction. For reciprocating the feeding arrangement along the frame girders, a hydraulic cylinder 11 is arranged between the rear stand and the feeding arrangement.

In the shown embodiment, the feeding girders 5 and the cross girders 9 have a height which is about half the height of the frame girders. As a result, the supporting surfaces 7 of the feeding girders are located at a level substantially half-way between the supporting surfaces 8 of the frame girders in the same section and in a subsequent section.

The rear end of the first section of the feeding arrangement is also supported on the supporting surfaces 8 of the frame girders by way of a cross girder 12. This end of the feeding arrangement also includes upwardly directed stanchions 13 to facilitate the loading of wood and secure the feeding of the wood from the first section 1.

To allow feeding of substantially all the wood from one section to the next, the frame girders 2 have recesses 14 in their respective step front edges 4. This makes it possible for the cross girders 9 to be fully retracted under the frame girders 2 in the retracted initial position, as shown in Figs 1 and 2.

The feeding device according to the invention can, in a practical embodiment for bundle feeding, have a width of about 3.5 m and a length of each section of about 2.0 m. The supporting surfaces 7 and 8, respectively, of the feeding girders and the frame. girders then make an angle of about 5° with the horizontal plane if the feeding device is arranged for substantially horizontal feeding from the loading end to the discharging end. The height of the step at the step front edges 4 and 6, respectively, is determined by the diameter of the biggest pieces of wood, which are to be fed by the step feeder, and the height of the step can suitably amount to about half of this diameter.

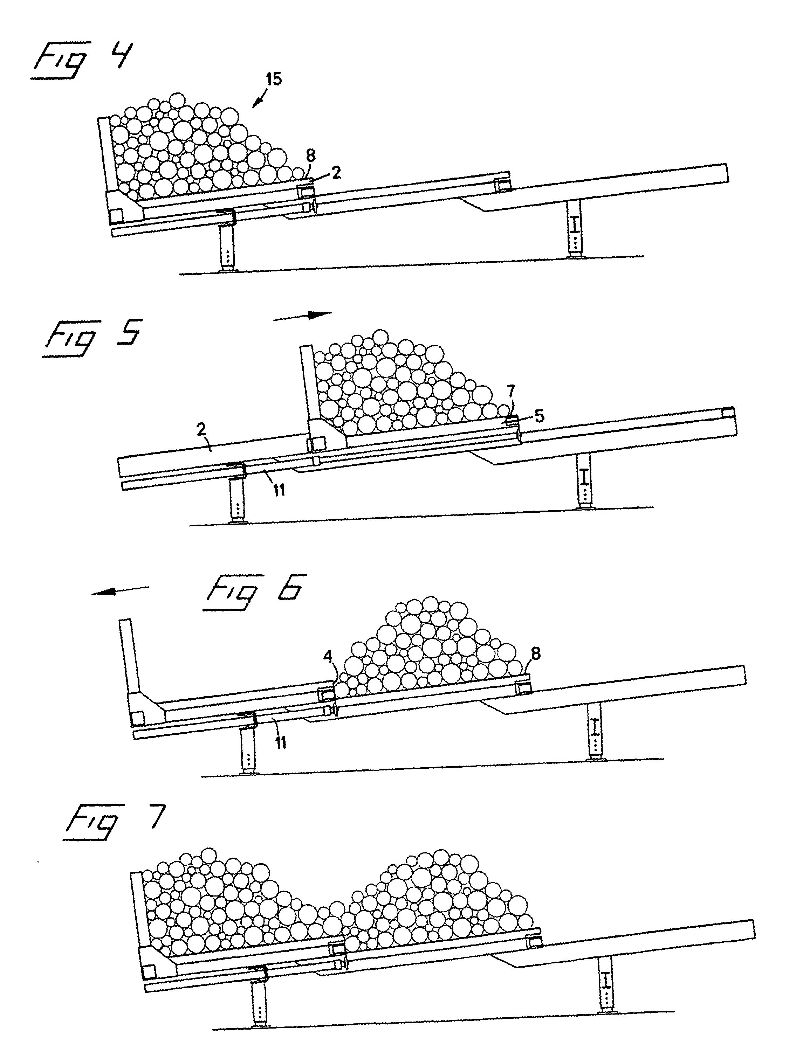

In the following, reference is made to Figs 4-10, which show the function of the feeding device when the wood is loaded and fed from the loading end to the discharging end.

Fig. 4 shows the feeding device with the feeding arrangement in a retracted initial position and a bundle of wood 15 loaded in the first section. The wood is here supported by the supporting surfaces 8 of the frame girders 2 of the first section.

In Fig. 5, the feeding arrangement is advanced by extending the hydraulic cylinder 11, and the bundle of wood is moved along the frame girder 2 of the first section and is successively moved down onto the feeding girders 5 in the first section of the feeding arrangement to finally be fully supported, as is shown in Fig. 5, on the supporting surfaces 7 of the feeding girders 5.

Subsequently, the feeding arrangement is moved backwards again by shortening the hydraulic cylinder 11. By engaging the step front edge 4 between the first and the second sections of the frame girders, the bundle of wood is successively conveyed from the feeding girders in the first section of the feeding arrangement down onto the frame girders in the second section to finally lie entirely on the supporting surfaces 8 thereof, as is shown in Fig. 6.

In Fig. 7, an additional bundle of wood has been loaded on the frame girders in the first section.

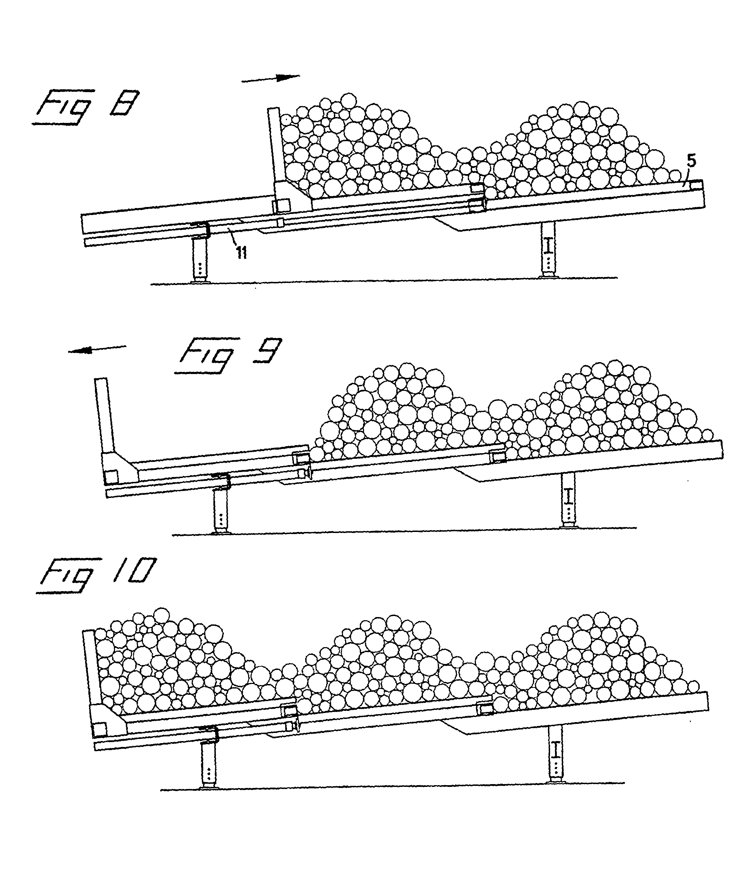

In Fig. 8, the feeding arrangement is again advanced by extending the hydraulic cylinder 11 and in addition to the bundle of wood on the first section of the frame girders being conveyed down onto the feeding girders in the first section of the feeding arrangement, the bundle of wood on the second section of the frame girders is conveyed down onto the feeding girders 5 in the second section of the feeding arrangement by engagement of the step front edge 6 with the wood.

In Fig. 9, the feeding arrangement is again moved to the initial position and the bundles of wood are moved away from the feeding girders down onto the second and the third sections of the frame girders by engaging the step front edges 4 between the first and the second and the second and the third sections, respectively, of the frame girders.

In Fig. 10, another bundle of wood has been loaded on the frame girders in the first section and the feeding device is in its initial position for a new feeding step. At the discharging end of the feeding device, some kind of processor or an additional feeding device, e.g. a single feeder, can suitably be arranged for further handling of the wood.

## Claims

1. A device for gradual cross-feeding of elongate objects from a loading end to a discharging end, comprising a stationary support frame (2), which in profile is stepped in at least three sections (1, 1', 1") which are arranged in separate planes and each have at least two upper sliding and supporting surfaces (8) extended in the feeding direction and intended for the objects and which, at their front end in the feeding direction are terminated with a step front edge (4) forming a step down to the sliding and supporting surfaces of a subsequent section, and a feeding arrangement (5), which is also stepped in profile and has one section less than the number of sections in the support frame and the sections of which each have at least two upper sliding and supporting surfaces (7) extended in the feeding direction and intended for the objects and are terminated at their front end in the feeding direction with a step front edge (6) forming a step downwards, the upper sliding and supporting surfaces (7) of the feeding arrangement in one section being, in a retracted initial position, vertically positioned at a level below the sliding and supporting surfaces (8) of the support frame in the corresponding section but at a level above the sliding and supporting surfaces of the support frame in a subsequent section, and the feeding arrangement being reciprocatable along the support frame by means of a power generating means (11) to effect the feeding of the objects by alternating engagement of the objects between the step front edges of the support frame and the feeding arrangement, **characterised in that** the feeding arrangement (5), as well as the objects, is supported by the sliding and supporting surfaces (8) of the support frame (2) and is reciprocatable along these.

2. A device according to claim 1, **characterised in that** the length of a section (1, 1', 1") is at least six times, preferably at least eight times and most preferred at least ten times greater than the height of the step between adjacent sections.

3. A device according to any one of the preceding claims, **characterised in that** the supporting surfaces (7, 8) have an angle of about 15° max, preferably about 10° max and most preferred about 6° max in relation to the horizontal plane.

4. A device according to any one of the preceding claims, **characterised in that** the support frame comprises at least two elongate, stepped girders (2).

5. A device according to any one of the preceding claims, **characterised in that** the feeding arrangement comprises at least two elongate, stepped girders (5).

6. A device according to any one of the preceding claims, **characterised in that** a rear end of the first section of the feeding arrangement (5) comprises at least one upwardly directed driver (13) for the objects.

## Patentansprüche

1. Vorrichtung zum allmählichen Querbefördem länglicher Objekte von einem Beschickungsende zu einem Ausgabeende, die einen stationären Tragerahmen (2), der im Profil in wenigstens drei Abschnitte (1, 1', 1") abgestuft ist, die in separaten Ebenen angeordnet sind und jeweils wenigstens zwei obere Gleit-und-Trage-Flächen (8) haben, die sich in der Förderrichtung erstrecken und für die Objekte bestimmt sind, und die an ihren vorderen Enden in der Förderrichtung in einer abgestuften Vorderkante (4) enden, die eine Stufe nach unten zu den Gleit-und-Trage-Flächen eines folgenden Abschnitts bildet, und eine Förderanordnung (5) umfasst, die im Profil ebenfalls abgestuft ist und einen Abschnitt weniger als die Anzahl von Abschnitten in dem Tragerahmen hat, wobei ihre Abschnitte jeweils wenigstens zwei obere Gleit-und-Trage-Flächen (7) haben, die sich in der Förderrichtung erstrecken und für die Objekte bestimmt sind, und ihrem vorderen Ende in der Förderrichtung in einer abgestuften Vorderkante (6) enden, die eine Stufe nach unten bildet, wobei die oberen Gleit-und-Trage-Flächen (7) der Förderanordnung in einem Abschnitt in einer eingezogenen Ausgangsposition vertikal auf einer Höhe unter den Gleit-und-Trage-Flächen (8) des Tragerahmens in dem entsprechenden Abschnitt, jedoch auf einer Höhe über den Gleit-und-Trage-Flächen des Tragerahmens in einem folgenden Abschnitt angeordnet sind, und die Förderanordnung an dem Tragerahmen mit einer Krafterzeugungseinrichtung (11) hin- und herbewegt werden kann, um das Fördem der Objekte durch abwechselnden Kontakt der Objekte zwischen den abgestuften Vorderkanten des Tragerahmens und der Förderanordnung zu bewirken, **dadurch gekennzeichnet, dass** die Förderanordnung (5) sowie die Objekte von den Gleit-und-Trage-Flächen (8) des Tragerahmens (2) getragen werden und an diesen entlang hin und herbewegt werden können.

2. Vorrichtung nach Anspruch 1, **dadurch gekennzeichnet, dass** die Länge eines Abschnitts (1, 1', 1") wenigstens sechsmal, vorzugsweise wenigstens achtmal und am besten wenigstens zehnmal größer ist als die Höhe der Stufe zwischen einander angrenzenden Abschnitten.

3. Vorrichtung nach einem der vorangehenden Ansprüche, **dadurch gekennzeichnet, dass** die Trageflächen (7, 8) einen Winkel von ungefähr 15° maximal, vorzugsweise ungefähr 10° maximal und am besten ungefähr 6° maximal in Bezug auf die horizontale Ebene haben.

4. Vorrichtung nach einem der vorangehenden Ansprüche, **dadurch gekennzeichnet, dass** der Tragerahmen wenigstens zwei längliche, abgestufte Träger (2) umfasst.

5. Vorrichtung nach einem der vorangehenden Ansprüche, **dadurch gekennzeichnet, dass** die Förderanordnung wenigstens zwei längliche, abgestufte Träger (5) umfasst.

6. Vorrichtung nach einem der vorangehenden Ansprüche, **dadurch gekennzeichnet, dass** ein hinteres Ende des ersten Abschnitts der Förderanordnung (5) wenigstens einen nach oben gerichteten Mitnehmer (13) für die Objekte umfasst.

## Revendications

1. Dispositif pour le chargement latéral progressif d'objets allongés d'une extrémité d'alimentation à une extrémité de décharge, comprenant une cadre de support stationnaire (2), qui, en profil, est étagé en au moins trois sections (1, 1', 1") qui sont agencées dans des plans séparés et ont chacune au moins deux surfaces coulissantes et de support supérieures (8) étendues dans la direction d'alimentation et destinées aux objets et qui, à leur extrémité avant dans la direction d'alimentation sont terminées par un bord avant de palier (4) formant un palier descendant vers les surfaces coulissantes et de support d'une section suivante, et un agencement d'alimentation (5), qui est également étagé en profil et a une section de moins que le nombre de sections dans le cadre de support et dont les sections ont au moins deux surfaces coulissantes et de support supérieures (7) étendues dans la direction d'alimentation et destinées aux objets et sont terminées à leur extrémité avant dans la direction d'alimentation par un bord avant de palier (6) formant un palier vers le bas, les surfaces coulissantes et de support supérieures (7) de l'agencement d'alimentation dans une section étant, dans une position initiale rétractée, positionnées verticalement à un niveau au-dessous des surfaces coulissantes et de support (8) du cadre de support dans la section correspondante mais à un niveau au-dessus des surfaces coulissantes et de support du cadre de support dans une section suivante, et l'agencement d'alimentation pouvant avoir un mouvement alternatif le long du cadre de support au moyen d'un moyen de génération de puissance (11) pour effectuer l'alimentation des objets par mise en prise alternée des objets entre les bords avant de palier et l'agencement d'alimentation, **caractérisé en ce que** l'agencement d'alimentation (5) ainsi que les objets sont soutenus par les surfaces coulissantes et de support (8) du cadre de support (2) et peuvent avoir un mouvement alternatif le long de celles-ci.

2. Dispositif selon la revendication 1, **caractérisé en ce que** la longueur d'une section (1, 1', 1") est d'au moins six fois, de préférence au moins huit fois et, de manière préférée entre toutes, au moins dix fois supérieure à la hauteur du palier entre des sections adjacentes.

3. Dispositif selon l'une quelconque des revendications précédentes, **caractérisé en ce que** les surfaces de support (7, 8) présentent un angle d'environ 15° maximum, de préférence d'environ 10° maximum et, de manière préférée entre toutes, d'environ 6° maximum par rapport au plan horizontal.

4. Dispositif selon l'une quelconque des revendications, **caractérisé en ce que** le cadre de support comprend au moins deux poutres allongées et étagées (2).

5. Dispositif selon l'une quelconque des revendications, **caractérisé en ce que** l'agencement d'alimentation comprend au moins deux poutres allongées et étagées (5).

6. Dispositif selon l'une quelconque des revendications précédentes, **caractérisé en ce qu'**une extrémité arrière de la première section de l'agencement d'alimentation (5) comprend au moins un dispositif d'entraînement dirigé vers le haut (13) pour les objets.
